# Europäisches Patentamt

## European Patent Office

## Office européen des brevets

(19)

(11) Veröffentlichungsnummer: **0 066 778**
**B1**

(12) # EUROPÄISCHE PATENTSCHRIFT

(45) Veröffentlichungstag der Patentschrift:
**12.03.86**

(51) Int. Cl.⁴: **F 16 B 13/14**, F 16 B 33/02

(21) Anmeldenummer: **82104566.3**

(22) Anmeldetag: **25.05.82**

(54) **Befestigungselement mit Kunststoffspreizhülse und Spreizschraube.**

(30) Priorität: **05.06.81 DE 3122503**

(43) Veröffentlichungstag der Anmeldung:
**15.12.82 Patentblatt 82/50**

(45) Bekanntmachung des Hinweises auf die Patenterteilung:
**12.03.86 Patentblatt 86/11**

(84) Benannte Vertragsstaaten:
**AT FR GB SE**

(56) Entgegenhaltungen:
**EP - A - 0 055 425**
**AT - B - 245 772**
**AT - B - 351 217**
**DD - A - 128 619**
**DE - A - 2 435 990**
**DE - U - 7 825 757**

(73) Patentinhaber: **HILTI Aktiengesellschaft,
FL-9494 Schaan (LI)**

(72) Erfinder: **Staab, Peter, Ing., Roggensteinerallee 44,
D-8031 Eichenau (DE)**
Erfinder: **Lang, Gusztav, Dr., Dipl.-Ing., Dr.
Böttcher-Strasse 26, D-8000 München 60 (DE)**

(74) Vertreter: **Wildi, Roland, Hilti Aktiengesellschaft
Patentabteilung, FL-9490 Schaan (LI)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Befestigungselement mit Kunststoffspreizhülse und Spreizschraube, wobei die Spreizhülse wenigstens im einführrichtungsseitigen Bereich eine sich in Einführrichtung verjüngende Längsbohrung, sowie einen sich vom einführrichtungsseitigen Ende her erstreckenden Längsschlitz aufweist, und die Spreizschraube wenigstens im einführrichtungsseitigen Bereich des Schaftes ein sich in Einführrichtung verjüngendes Gewinde trägt, wobei die in Einführrichtung weisende Gewindeflanke nach Art eines Rundgewindes konvex gewölbt ist.

Bekannte Befestigungselemente werden durch Eindrehen einer Spreizschraube in eine Kunststoffspreizhülse in einer untergrundseitigen Aufnahmebohrung verankert.

Die Spreizschraube ist in der Regel als Holzschraube ausgebildet, deren Gewinde ein Spitzprofil aufweist. Beim Eindrehen dieser Spreizschraube schneiden sich die Gewindespitzen in die Wandung der Längsbohrung der Spreizhülse und spreizen dabei die Hülse gegen die Wandung der Aufnahmebohrung. Dies trifft in erhöhtem Masse für den vorderen, in Einführrichtung weisenden Bereich der Spreizhülse zu, da hier die Längsbohrung einen sich nach vorne verjüngenden Ausgangsquerschnitt aufweist.

Das Einschneiden des Spitzgewindes in die Spreizhülse hat eine Schwächung des Hülsenquerschnittes zur Folge und erfordert auch ein sehr hohes Eindrehmoment, das vom Handhabenden aufzubringen ist. Zudem können mit diesen bekannten Befestigungselementen nur relativ niedere Haltewerte erreicht werden, da das erfahrungsgemäss sehr tiefe Einschneiden der Gewindespitzen in die Wandung der Spreizhülse auf Kosten ausreichenden radialen Weitens der Spreizhülse erfolgt. Aufgrund des hohen Anteils plastischer Verformung der Spreizhülse beim Eindrehen der Spreizschraube mit Spitzgewinde tritt eine ungünstige Spannungsverteilung gegenüber der Wandung der Aufnahmebohrung ein.

Aus der DD-A-128 619 ist es bekannt, einen Schraubnagel mit einem sägezahnförmigen Gewinde mit zum rückwärtigen Ende des Schraubnagels steil und zu seinem vorderen Ende flach geneigten Flanken auszubilden. Diese Gewindeform wirkt sich zwar vorteilhaft auf die Verankerung des Schraubnagels in einer Kunststoffspreizhülse aus, hat ansonsten aber die vorstehend beschriebenen Nachteile.

Aus dem DE-GM 7 825 757 ist ein Befestigungselement mit Kunststoffspreizhülse und Rundgewinde-Spreizschraube bekannt. Diese Gewindeart zeichnet sich durch ein vergleichsweise kleineres Eindrehmoment aus, da die im Querschnitt runden Gewindegänge mit erheblich geringerer spezifischer Flächenpressung als bei Spitzgewinden gegen die Wandung der Spreizhülse drücken und sich folglich vergleichsweise wenig in die Wandung der Spreizhülse eingraben. Das Rundgewinde wirkt sich in bezug auf den Ausziehwert der Spreizschraube in der Spreizhülse nachteilig aus, da die entgegen der Einführrichtung weisende Flanke sinusartig verläuft und somit als Abstützschulter nur relativ geringe Kräfte abzustützen vermag. Die Ursache dessen liegt in der pflugartigen Wirkung dieser Flankenform gegenüber der Spreizhülse bei Ausziehbelastung.

Der Erfindung liegt die Aufgabe zugrunde, ein Befestigungselement zu schaffen, das sich durch geringes Eindrehmoment der Spreizschraube und hohe Haltewerte auszeichnet.

Erfindungsgemäss wird die Aufgabe dadurch gelöst, dass die Gegenflanke zur konvex gewölbten Gewindeflanke geradlinig verläuft und zur Schraubenachse hin einen Winkel von 90° bis 60° einschliesst und dass zwischen der gewölbten Gewindeflanke und der Gegenflanke ein geradliniger Rücken vorgesehen ist.

Durch konvexe Ausbildung der in Einführrichtung weisenden Gewindeflanke wird ein geringes Eindrehmoment der Spreizschraube erzielt, da es so nicht zum Einschneiden des Gewindes in die Wandung der Spreizhülse kommt. Die sich an den Scheitel dieser Gewindeflanke anschliessende entgegen der Einführrichtung weisende geradlinige Gegenflanke, die gegenüber der Schraubenachse unter einem einschliessenden Winkel von höchstens 90° und wenigstens 60° zum Kernquerschnitt der Spreizschraube hin verläuft, schafft darüber hinaus eine gute Abstützung der Spreizschraube in der Spreizhülse in Auszugsrichtung. Damit wird ein hoher Haltewert erzielt. Um das radiale Auslenken der Spreizhülse gegen die Wandung der Aufnahmebohrung weitergehend zu begünstigen, erstreckt sich zwischen der gewölbten Gewindeflanke und der Gegenflanke ein geradliniger Rücken. Der etwa in den Scheitel der konvex gewölbten Gewindeflanke verlaufende Rücken bildet eine grosse Anlagefläche der Gewindegänge an der Wandung der hülsenseitigen Längsbohrung, so dass die Gewindegänge die Spreizhülse unter Nutzung der elastischen Verformbarkeit schraubenlinienförmig ausbauchen.

Maximales radiales Aufweiten der Spreizhülse wird mit Vorteil durch einen sich parallel zur Schraubenachse erstreckenden Rücken erzielt. Das Eingraben des Gewindes in die Wandung der Hülse und damit das Eindrehmoment wird dank der durch den Rücken gebildeten grossen Anlagefläche minimiert.

Der Auszugswert der Spreizschraube kann noch erhöht werden, wenn nach einem weiteren Vorschlag der Erfindung der Rücken in Einführrichtung der Spreizschraube sich der Schraubenachse nähernd geneigt ist. Die Neigung des Rückens gegenüber der Schraubenachse übersteigt vorzugsweise 15° nicht, um das schneidfreie radiale Verdrängen der Spreizhülse sicherzustellen. Der vorschlagsgemäss geneigte Rücken bildet zusammen mit der Gegenflanke eine Art Sägezahn, der sich bei Auszugsbelastung der Spreizschraube in der Spreizhülse widerhakenartig verkrallt.

Die Erfindung sei nachstehend anhand einer Zeichnung, die Ausführungsbeispiele beinhaltet, näher erläutert. Der

Fig. 1 ist ein Befestigungselement im Montageeinsatz, der
Fig. 2 ein Gewindeausschnitt der in Fig. 1 gezeigten Spreizschraube, in vergrösserter Darstellung, der
Fig. 3 ein Gewindeausschnitt einer weiteren Ausbildungsform einer Spreizschraube, in vergrösserter Darstellung, entnehmbar.

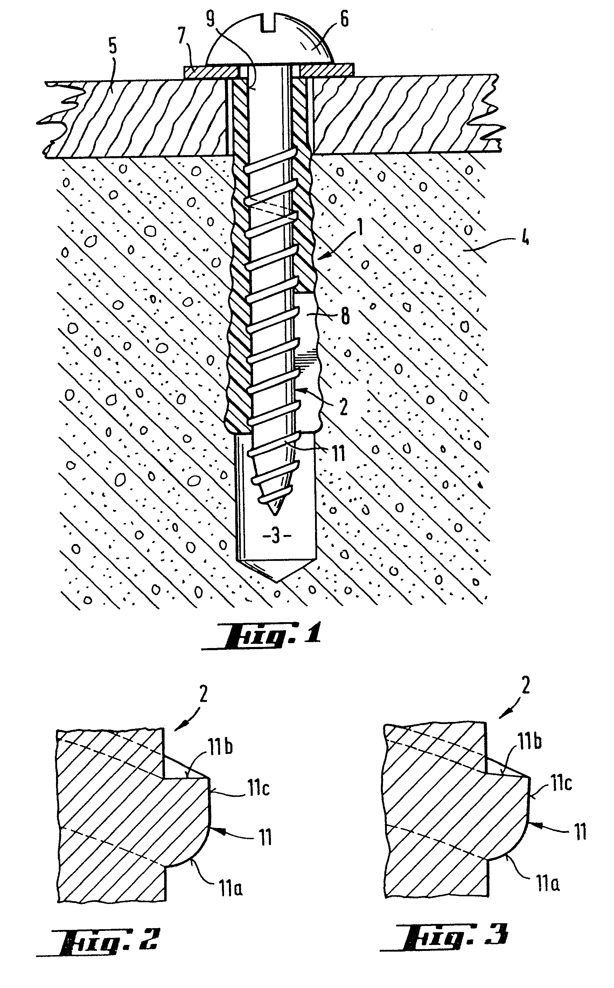

Das in Fig. 1 dargestellte Befestigungselement besteht aus einer insgesamt mit 1 bezeichneten Kunststoffspreizhülse und einer insgesamt mit 2 bezeichneten Spreizschraube. Das Befestigungselement ist in eine Aufnahmebohrung 3 eines Untergrundes 4 eingesetzt und dient dem Anbringen einer Holzlatte 5 am Untergrund 4. Die Holzlatte 5 ist hierzu vom Befestigungselement durchgriffen und wird vom Kopf 6 der Spreizschraube 2, unter Zwischenlage einer Beilegscheibe 7, gegen den Untergrund 4 gespannt.

Um das radiale Weiten der Spreizhülse 1 zu erleichtern, weist diese Längsschlitze 8 auf. Zum Spreizvorgang wird die Spreizschraube 2 in die Längsbohrung 9 der Spreizhülse 1 eingedreht. Da die Längsbohrung 9 im einführrichtungsseitigen Endabschnitt in Ursprungsstellung der Spreizhülse 1 sich in Einführrichtung konisch verjüngend ausgebildet ist, kommt es in diesem Hülsenabschnitt zu der erkennbaren grösseren radialen Weitung.

Die Spreizschraube 2 weist ein Gewinde 11 auf, das sich über den vorderen Teil des Schraubenschaftes sowie über den spitzen Auslauf des Schraubenschaftes erstreckt. Die Gewindegänge drücken beim Eindrehen der Spreizschraube 2 die gewindenahen Zonen der Spreizhülse 1 radial nach aussen und verspreizen so die Spreizhülse kraft- und formschlüssig in der Aufnahmebohrung 3. Dank der erfindungsgemässen Ausgestaltung des Gewindes 11 schneiden sich die Gewindegänge dabei nicht in die Wandung der Spreizhülse 1 ein, so dass die Spreizschraube 2 mit relativ kleinem Eindrehmoment vorgetrieben werden kann.

Der in Fig. 2 gezeigte vergrösserte Längsschnitt durch einen Gewindegang der Spreizschraube 2 zeigt, dass die in Einführrichtung weisende Gewindeflanke 11a bogenförmig konvex gewölbt ist und die Gegenflanke 11b unter einem Winkel von 90° zur Schraubenachse verläuft. Von einer zur anderen Flanke erstreckt sich parallel zur Schraubenachse ein geradliniger Rücken 11c.

Das in Fig. 3 verdeutlichte Gewinde 11 weist ebenso eine in Einführrichtung weisende konvex gewölbte Gewindeflanke 11a auf. Ferner ist eine Gegenflanke 11b vorgesehen, die allerdings unter einem geringfügig weniger als 90° betragenden spitzen Winkel zur Schraubenachse verläuft. Zwischen den beiden Flanken erstreckt sich wiederum ein Rücken 11c, der zur Schraubenachse in einem Winkel von etwa 10° geneigt ist.

## Patentansprüche

1. Befestigungselement mit Kunststoffspreizhülse (1) und Spreizschraube (2), wobei die Spreizhülse (1) wenigstens im einführrichtungsseitigen Bereich eine sich in Einführrichtung verjüngende Längsbohrung (9), sowie einen sich vom einführrichtungsseitigen Ende her erstreckenden Längsschlitz (8) aufweist, und die Spreizschraube (2) wenigstens im einführrichtungsseitigen Bereich des Schaftes ein sich in Einführrichtung verjüngendes Gewinde (11) trägt, wobei die in Einführrichtung weisende Gewindeflanke (11a) nach Art eines Rundgewindes konvex gewölbt ist, dadurch gekennzeichnet, dass die Gegenflanke (11b) zur konvex gewölbten Gewindeflanke (11a) geradlinig verläuft und zur Schraubenachse hin einen Winkel von 90° bis 60° einschliesst und dass zwischen der gewölbten Gewindeflanke (11a) und der Gegenflanke (11b) ein geradliniger Rücken (11c) vorgesehen ist.

2. Befestigungselement nach Anspruch 1, dadurch gekennzeichnet, dass sich der Rücken (11c) parallel zur Schraubenachse erstreckt.

3. Befestigungselement nach Anspruch 1, dadurch gekennzeichnet, dass der Rücken (11c) in Einführrichtung der Spreizschraube (2) sich der Schraubenachse nähernd geneigt ist.

## Claims

1. A fastening element comprising a plastics expansible sleeve (1) and an expansion screw (2), in which respect the expansible sleeve (1) has a longitudinal bore (9) which tapers in the insertion direction at least in its region towards the insertion direction end, as well as a longitudinal slot (8) which extends from the insertion direction end, and the expansion screw (20), at least in that region of its shaft which is towards the insertion direction end, is provided with a thread (11) which narrows in the insertion direction, in which respect the thread flank (11a) pointing in the insertion direction is convexly arched in the manner of a round thread, characterised in that the counterflank (11b) to the convexly arched thread flank (11a) extends rectilinearly and forms an angle of 90° to 60° relative to the screw axis, and in that a rectilinear ridge (11c) is provided between the arched thread flank (11a) and the counter-flank (11b).

2. A fastening element according to claim 1, characterised in that the ridge (11c) extends parallel to the screw axis.

3. A fastening element according to claim 1, characterised in that in the insertion direction of the expansion screw (2) the ridge (11c) is inclined towards the screw axis.

## Revendications

1. Organe de fixation comportant une douille expansible (1) en matière plastique et une vis d'expansion (2), dans lequel la douille expansible (1) comporte au moins dans la zone du côté de la direction d'introduction, un trou longitudinal (9) se rétrécissant dans la direction d'introduction, ainsi qu'une fente longitudinale (8) s'étendant à partir de l'extrémité située du côté de la direction d'introduction, et la vis d'expansion (2) porte au moins dans une zone de sa tige, du côté de la direction d'introduction, un filetage (11) se rétrécissant dans la direction d'introduction, et dans lequel le flanc (11a) du filetage, qui est dirigé vers la direction d'introduction possède un cintrage convexe à la manière d'un filet rond, caractérisé en ce que le contre-flanc (11b), qui est tourné à l'opposé du flanc (11a) du filetage cintré avec une forme convexe, possède une forme rectiligne et fait un angle compris entre 90° et 60° avec l'axe de la vis et qu'un dos rectiligne (11c) est prévu entre le flanc cintré (11a) et le contre-flanc (11).

2. Organe de fixation selon la revendication 1, caractérisé en ce que le dos (11c) s'étend parallèlement à l'axe de la vis.

3. Organe de fixation selon la revendication 1, caractérisé en ce que le dos (11c) est incliné de manière à se rapprocher de l'axe de la vis, dans la direction d'introduction de la vis d'expansion (2).

Fig. 1

Fig. 2

Fig. 3